# EUROPEAN PATENT SPECIFICATION

(11) **EP 1 617 626 B1**
(45) Date of publication and mention of the grant of the patent: **26.08.2009**
(21) Application number: 05291473.6
(22) Date of filing: 07.07.2005
(51) Int. Cl.: H04L 29/08, G06F 1/00

(54) **Remote access to content management information through a server**
Fernzugriff auf Inhaltsmanagementinformationen durch einen Server
Accès à distance à des informations de gestion de contenu à travers d'un serveur

(30) Priority: 14.07.2004 JP 2004206945
(43) Date of publication of application: 18.01.2006
(73) Proprietor: Sony Corporation, Tokyo (JP)
(72) Inventor: Takeda, Takashi, Sony Corporation, Shinagawa-ku, Tokyo (JP); Koresawa, Akio, Sony Corporation, Shinagawa-ku, Tokyo (JP); Sukigara, Ryu, Sony Corporation, Shinagawa-ku, Tokyo (JP); Ohshige, Yoichi, Sony Corporation, Shinagawa-ku, Tokyo (JP)
(74) Representative: Thévenet, Jean-Bruno

(56) References cited:
- EP-A- 1 196 002
- WO-A-02/073992
- US-A1- 2002 077 985

## Description

### BACKGROUND OF THE INVENTION

### FIELD OF THE INVENTION

The present invention relates to content systems, content terminals, reference servers, content programs, and reference programs and, more specifically, to a system for using a reference server for reference of the management status of a content in a content terminal.

### DESCRIPTION OF THE RELATED ART

The development of communications networks exemplified by the Internet has led to services of, over the networks, content transmission from content servers to content terminals.

With such services, contents become available for users by download or streaming distribution from the content servers to the content terminals, for example.

The content terminals are in charge of generating and updating management information about contents that become available through purchase, for example, and managing the contents using the resulting management information.

The users refer to the management information to see the status of contents available in the content terminals, e.g., list of purchased contents, download progress, or requirements for license purchase.

Such content services over the networks are found in Patent Document 1 (JP-A-2003-216828), describing about "content sales system and method".

In Patent Document 1, a content is transmitted to member users, and a license is issued to the users to put the content to use. After user authentication using the license, the content becomes available for the users.

US 2002/077985 describes a system for transferring digital content and digital rights information from a sender to a receiver, via an intermediate server. The intermediate server stores a copy of the receiver's digital rights information. As the receiver manipulates and accesses the received digital content, usage information is sent to the intermediate server and updates the digital rights information stored in the intermediate server. This enables the sender to track the receiver's usage of the digital content. The sender generates the initial rights information that is stored in the intermediate server and can access and change the rights information. The user's terminal communicates with the intermediate server to update the rights information held at the intermediate server, in accordance with use and manipulation of the content at the user terminal.

WO02/073992 describes a system in which the personalized telephone directory of a mobile telephone user is reproduced on a server so that the user can access and update the telephone directory even when he changes his mobile telephone.

EP-A-1 196 002 describes a system for allowing structural appliances (e.g. air conditioning devices, heating appliances, etc) to be remotely controlled. Remote control is effected using a server which receives commands from mobile devices and issues commands to the structural appliances.

### SUMMARY OF THE INVENTION

The problem addressed by the present invention is that the user of a content terminal receiving digital content cannot refer, from external terminals, to management information in the content terminal. This thus does not allow the users to check the content status away from home using their portable terminals, e.g., what contents have been purchased, license acquisition status, or content booking status. This may disadvantageously cause the users to mistakenly purchase the same content twice, for example.

Therefore, it is considered desirable to eliminate the need for directly accessing the content terminals to refer to and update the details of the management information.

According to an embodiment of the present invention, there is provided a content system including:
a content terminal, operable by a user, for receiving a content from a content server, and
a reference server for providing selective access to reference information indicative of a management status of content under management by said content terminal; wherein:
   the content terminal is adapted to manage content in accordance with said user's commands, to generate, update and store management information indicating the management status of the content, and to transmit to said reference server management information generated thereby and updated management information, said management information including one or more items selected in the group consisting of: information identifying content under management by the content terminal, appendix information associated with content, data indicative of the acquisition status of a license associated with content, data indicative of the download status of content, data indicative of the deleted status of content, and data indicative of the booked-for-reception status of content, and
   the reference server is adapted to store reference information generated by said content terminal and received from said content terminal, said reference information corresponding to a subset of said management information, to maintain a synchronization of details between the reference information stored at the reference server and the management information stored at the content terminal through communications with the content terminal, and to give said user permission to view details of the reference information resulting from the synchronization of details, via a terminal different from said content terminal (First Configuration).

According to the embodiment of the present invention, there is also provided a content terminal, operable by a user and adapted to manage content in accordance with said user's commands, said content terminal comprising:
content means for receiving a content from a content server;
a management information generation section adapted to generate management information indicating a management status of the content under management by said control terminal, said management information including one or more items selected in the group consisting of:
   information identifying content under management by the content terminal, appendix information associated with content, data indicative of the acquisition status of a license associated with content, data indicative of the download status of content, data indicative of the deleted status of content, and data indicative of the booked-for-reception status of content;
   management information storage means for storing the generated management information;
   management information update means for updating the stored management information when a change occurs in the management status of the content;
   management information transmission means for transmitting generated management information and updated management information details to a reference server in charge of managing selective access by said user, from a terminal different from said content terminal, to reference information corresponding to a subset of details of the management information. (Second Configuration).

In the second configuration, alternatively, the content terminal may include an appendix information reception section for receiving, from an appendix information provision server, appendix information coming together with the content provided by the content server, and a management information generation section for generating the management information using the received appendix information and the management status of the content. With such a configuration, the management information storage section may store the generated management information (Third Configuration).

In the third configuration, alternatively, the content terminal may include: an operation command reception section for receiving, from the reference server, an operation command received by the reference server from the user via the different terminal for the content referred to by the reference information; an operation section for executing an operation to the content by following the received operation command; and an update section for updating the management information of the content stored by the management information storage section using the details of the operation (Fourth Configuration).

In the third configuration, still alternatively, when the management information of the content being an operation target of the operation command is not found in the management information storage section, the content terminal may include an additional storage section for additionally storing the management information of the content into the management information storage section (Fifth Configuration).

According to the embodiment of the present invention, there is also provided a reference server comprising:
management information reception means for receiving, from a content terminal for managing a content in accordance with commands from a user, management information generated by said content terminal and updated management information details derived by the content terminal updating the details of the management information, said management information being indicative of the management status of content under management by said content terminal and including one or more items selected in the group consisting of: information identifying content under management by the content terminal, appendix information associated with content, data indicative of the acquisition status of a license associated with content, data indicative of the download status of content, data indicative of the deleted status of content, and data indicative of the booked-for-reception status of content;
reference information storage means for storing reference information indicative of a subset of details of said management information generated by the content terminal;
reference information update means for updating the stored reference information using the received updated details; and
selective access-control means adapted to allow said user access to the reference information via a terminal different from said content terminal. (Sixth Configuration).

In the sixth configuration, alternatively, the reference server may include a check request accept section for accepting a request from the user via the different terminal for checking the stored reference information, and a reference details transmission section for transmitting, to the different terminal, the details of the reference information in accordance with the accepted check request (Seventh Configuration).

In the sixth configuration, still alternatively, the reference server may include an operation command accept section for accepting, from the user via the different terminal, an operation command for the content referred to by the reference information, and an operation command transmission section for transmitting the accepted operation command to the content terminal. In the reference server, the reference information update section may update the stored reference information using the accepted operation command (Eighth Configuration).

In the eighth configuration, alternatively, the operation command accept section may accept, from the user via the different terminal, an operation command for the content not referred to by the reference information. The operation command transmission section may transmit, to the content terminal, the operation command for the content not referred to by the accepted reference information. The reference information update section may make the reference information storage means additionally store the reference information of the content not referred to by the reference information (Ninth Configuration).

According to the embodiment of the present invention, there is also provided a computer program to, when loaded into a computer and executed therein, perform the steps of:
receiving a content from a content server in accordance with an instruction from a user;
generating management information indicating a management status of the content, said management information including one or more items selected in the group consisting of: information identifying content under management by the content terminal, appendix information associated with content, data indicative of the acquisition status of a license associated with content, data indicative of the download status of content, data indicative of the deleted status of content, and data indicative of the booked-for-reception status of content;
storing said generated management information;
transmitting said generated management information to a reference server in charge of managing selective access by said user, via a terminal different from said content terminal, to reference information corresponding to a subset of details of the management information;
updating the stored management information when a change occurs in the management status of the content; and
transmitting updated management information details to said reference server. (Tenth Configuration).

In the tenth configuration, alternatively, the computer program may perform the steps of receiving, from an appendix information provision server, appendix information coming together with the content provided by the content server, and generating the management information using the received appendix information and the management status of the content. (Eleventh Configuration).

In the eleventh configuration, alternatively, the computer program may perform the steps of: receiving, from the reference server, an operation command received by the reference server from the user via the different terminal for the content referred to by the reference information; executing an operation to the content by following the received operation command; and updating the management information of the content stored in the management information storage step using the details of the operation (Twelfth Configuration).

In the eleventh configuration, still alternatively, the computer program may include the step to making the management information storage step additionally store the management information of the content being an operation target of the operation command when the management information of the content has not been stored in the management information storage step (Thirteenth Configuration).

According to the embodiment of the present invention, there is also provided a computer program to, when loaded into a computer and executed therein, perform the steps of:
receiving, from a content terminal for managing a content in accordance with commands from a user, management information generated by said content terminal and updated details derived by the content terminal updating the details of the management information, said management information including one or more items selected in the group consisting of: information identifying content under management by the content terminal, appendix information associated with content, data indicative of the acquisition status of a license associated with content, data indicative of the download status of content, data indicative of the deleted status of content, and data indicative of the booked-for-reception status of content;
storing reference information indicative of a subset of details of said management information generated by the content terminal;
updating the stored reference information using the received updated details; and
selectively providing said user with access to the reference information via a terminal different from said content terminal. (Fourteenth Configuration).

In the fourteenth configuration, alternatively, the computer program may include the steps of accepting a request from the user via the different terminal for checking the stored reference information, and transmitting, to the different terminal, the details of the reference information in accordance with the accepted check request (Fifteenth Configuration).

In the fourteenth configuration, still alternatively, the computer program may include the steps of accepting, from the user via the different terminal, an operation command for the content referred to by the reference information, and transmit the accepted operation command to the content terminal. The reference information update step may be configured to update the stored reference information using the accepted operation command (Sixteenth Configuration).

In the sixteenth configuration, alternatively, the operation command accept step may accept, from the user via the different terminal, an operation command for the content not referred to by the reference information. The operation command transmission step may transmit, to the content terminal, the operation command for the content not referred to by the accepted reference information. The reference information update step may make the reference information storage step additionally store the reference information of the content not referred to by the reference information (Seventeenth Configuration).

According to an embodiment of the present invention, it is possible for a user to refer to and update the details of the management information which is under management of the content terminal without a direct access to the content terminal.

### BRIEF DESCRIPTION OF THE DRAWINGS

FIG. 1 is a block diagram showing an exemplary configuration of a content system;
FIGS. 2A and 2B are both a block diagram schematically showing the function configuration of a content terminal and a reference server;
FIG. 3 is a diagram showing an exemplary logical configuration of management information;
FIG. 4 is a diagram showing an exemplary logical configuration of reference information;
FIG. 5 is a diagram showing an exemplary reference screen;
FIG. 6 is a flowchart for illustrating the procedure of establishing a synchronization of information details between the reference server and the content terminal;
FIG. 7 is a flowchart for illustrating the procedure of accessing a reference site; and
FIG. 8 is a diagram showing an exemplary hardware configuration of the content terminal.

### BEST MODE FOR CARRYING OUT THE INVENTION

### (Summary of Embodiment)

A content terminal is storing management information, which indicates the management status of contents available therein, e.g., content meta data, download time, or with or without license.

When the management status of the contents shows some change through operation, e.g., purchasing new contents, deleting purchased contents, or acquiring licenses, the content terminal updates the management information in its storage to meet the change. Thus updated details are notified to a reference server.

The reference server is the one storing reference information, which carries the same types of details as the management information.

The management information and the reference information are correlated to each other with user identification information exemplified by a user ID.

When receiving the updated details of the management information from the content terminal, the reference server accordingly updates the reference information of the identified user using the details.

In this manner, the management information in the content terminal is correlated with the reference information in the reference server.

The reference server has a reference site to make the reference information available for viewing on the network.

Thanks to the synchronization of details established between the management information and the reference information, the users can check the details of the management information with the content terminal by making an access to the reference site for their own reference information.

The management information in the content terminal is available from no other client terminal, but is indirectly available for reference from the reference site.

This allows the users to check the details of the management information away from home using their mobile phones to make an access to the reference site, for example.

The users are thus not to purchase the same content twice, or can check before purchase whether any want-to-purchase contents are already downloaded or not, for example.

Moreover, because the reference server stores the same types of details as the management information, when the content terminal is moved to any other client terminal, license acquisition for a second time becomes easy.

What is more, the reference server can accept operation commands in the reference site, e.g., content booking or purchase, or deletion of downloaded content.

When accepting an operation command in the reference site, the reference server updates the reference information based on the operation command, and forwards the operation command to the content terminal.

After receiving the operation command coming from the reference server, the content terminal accordingly executes an operation to the content such as content deletion or purchase.

If an inconsistency arises between the operation command issued by the users from the content terminal and the operation command from the reference site, the inconsistency is resolved in such a manner as giving a higher priority to the operation command accepted more recent of the two.

### (Detailed Description of Embodiment)

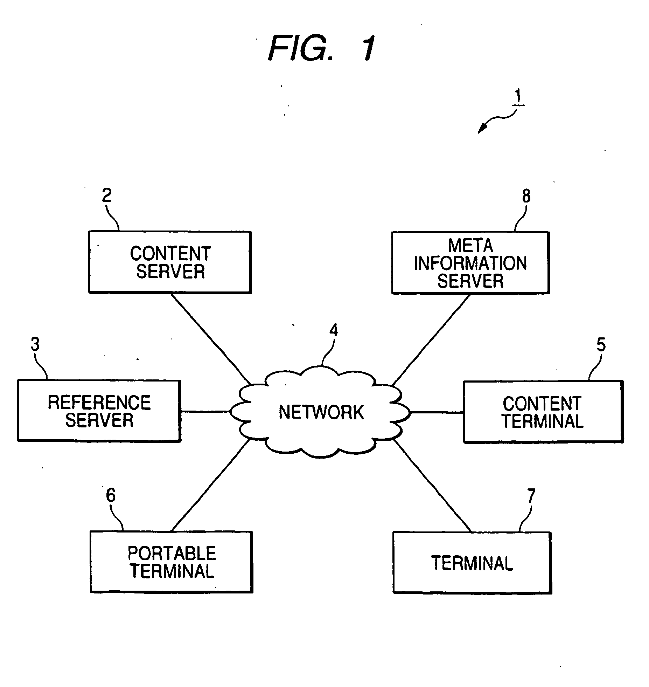

FIG. 1 is a block diagram showing an exemplary configuration of a content system of an embodiment.

A content system 1 is configured by a content server 2, a reference server 3, a content terminal 5, a meta information server 8, a portable terminal 6, and a terminal 7, those of which are connected to one another over a network 4.

The content server 2 provides digital contents to the content terminal 5. The contents provided by the content server 2 are diverse in type, including movie contents, static contents, game contents, music contents, and others.

For content provision, content download or streaming distribution to the content terminal 5 will do.

The meta information server 8 provides meta information of the contents available by the content server 2.

The meta information is appendix information coming together with the contents, including content title, who are appearing, reproduction time, data amount, content overview, and others.

A synchronization of details is established between the contents available by the content server 2 and those from the meta information server 8 by content identification information, for example.

In the present embodiment, the contents and the meta information are described as coming from each different server. This is not restrictive, and the contents and the meta information are to be provided by the same server, e.g., from the content server 2.

Similarly, the reference server 3 may be configured similarly to the content server 2 or the meta information server 8, or may be configured differently therefrom.

The content terminal 5 is a client terminal using the contents provided by the content server 2, and is configured exemplarily by a personal computer, game machine, set-top box, or any other types of terminals.

The content terminal 5 singly provided in FIG. 1 may be provided plurally.

The content terminal 5 receives meta information from the meta information server 8, and contents from the content server 2. When a license is required to reproduce a specific content, the content terminal 5 receives the license from a license server that is not shown.

In the present embodiment, content reproduction presumably requires a license.

The content terminal 5 stores management information of contents in users' hands.

The management information is updated by the content terminal 5 in such a manner as to reflect the current management status of the contents. The users refer to the resulting updated management information to see the current management status of the contents.

The contents are to be purchased in various manners, and for example, the following manner is an option.

The content terminal 5 first polls the meta information server 8 on a regular basis so as to see whether any new content is available.

When there is any new content, the content terminal 5 downloads the meta information from the meta information server 8 for addition to the management information. The content terminal 5 also downloads the new content from the content server 2.

The user views the downloaded content using the content terminal 5, and if he or she wants to purchase the content, the user purchases the license of the content from the license server for reproduction of the content.

Alternatively, the user may make an access from the content terminal 5 to a sales site set up in the meta information server 8 or others, and download meta information of his or her wanting content.

The content terminal 5 downloads the corresponding content from the content server 2, and then purchases the license thereof from the license server for reproduction of the content.

Exemplified above is a case of changing the timing for meta information download and the timing for content acquisition. This serves well when the content server 2 is presumed to be heavily accessed due to sales of new contents, for example. With this being the case, only the meta information may be forwarded to the content terminal 5 for the meantime so that the transmission time of the contents can be varied.

When the management information is updated, and on a regular basis, for example, the content terminal 5 polls the reference server 3 and forwards the management information to the reference server 3.

Note here that, instead of forwarding the management information in its entirety, only the updated details may be forwarded.

The reference server 3 is in charge of managing the reference information, which is used to refer to the management information that is under the management of the content terminal 5.

The reference information is linked to a user ID, and using this user ID, the reference information is correlated with the management information.

The reference information has the same types of items as the management information, and the reference server 3 communicates with the content terminal 5 to establish a synchronization of details between the reference information and the management information.

The timing for establishing such a synchronization of details is when the content terminal 5 polls the reference server 3, and the reference server 3 updates the reference information in such a manner as to match it to the management information received from the content terminal 5.

The reference server 3 has a reference site that is accessible using the user ID, password, and the like, for viewing of the reference information.

In the reference site, the reference information of the user identified by the user ID and the password is displayed, and operation commands are accepted for content deletion, content booking, or others.

The reference server 3 forwards the operation commands accepted in the reference site at the timing when the content terminal 5 polls.

The portable terminal 6 is a client terminal configured by a mobile phone, a PDA (Personal Digital Assistant), or the like, and can make an access to the reference site of the reference server 3 over the network 4.

The portable terminal 6 singly provided in FIG. 1 may be provided plurally.

The portable terminal 6 includes a display unit exemplified by a liquid crystal display, and can display the details of the reference information coming from the reference server 3.

The portable terminal 6 also includes an input unit for accepting key inputs or others for use to make inputs of URL (Uniform Resource Locators) of the reference site, user ID and password to access the reference site.

Thanks to the synchronization of details established between the reference information and the management information, by accessing the reference site, the users can indirectly check the management information through viewing of the reference information.

In an alternative manner, the users can forward operation commands to the content terminal 5 via the reference site.

The terminal 7 is a client terminal configured by a personal computer or others, for example, and includes a browser for accessing the reference site of the reference server 3.

The terminal 7 singly provided in FIG. 1 may be provided plurally.

Similarly to the portable terminal 6, the terminal 7 can display the details of the reference information, or input the operation commands for the contents in the reference site.

The network 4 is configured by the Internet, for example, and mediates the communications among the components, i.e., the content server 2, the reference server 3, the meta information server 8, the content terminal 5, the portable terminal 6, the terminal 7, and others.

The network 4 is implemented by a telephone circuit, an optical communications network, a radio communications network, a communications network using communications satellites, or the like. The LAN (Local Area Network), WAN (Wide Area Network), or others are also options.

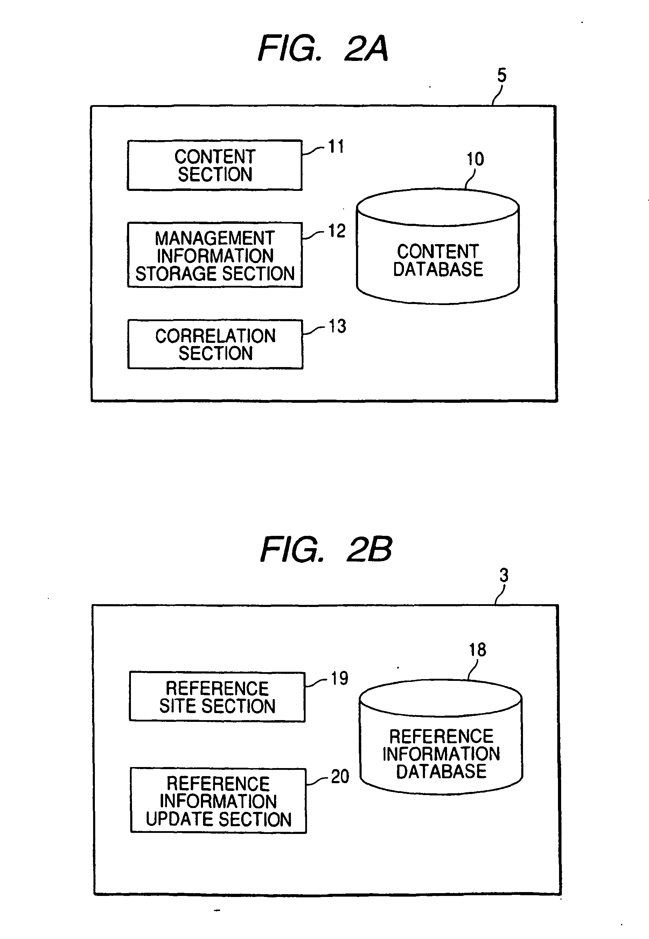

FIG. 2A is a block diagram schematically showing the function configuration of the content terminal 5.

As shown in FIG. 2A, the content terminal 5 includes a content database 10, a content section 11, a management information storage section 12, a synchronization section 13, and others.

The content database 10 stores contents and information needed for reproducing the contents, e.g., the meta information downloaded from the meta information server 8, the contents downloaded from the content server 2, the licenses downloaded from the license server, and the like.

These contents, meta information, and licenses are linked together by the content identification information, for example.

The content section 11 is provided for the users to use the contents, and operates to receive the contents, reproduce the contents, activate the contents, and record and update the management information.

In the below, these operations are described.

### 1. Content Reception

The content section 11 downloads the meta information from the meta information server 8 for storage into the content database 10, and from the content server 2, downloads the content corresponding to the meta information.

As to any content for streaming distribution, the content section 11 receives the meta information but goes through no content download.

The content is put under the management of the content terminal 5 at the time when the meta information is downloaded, and the content section 11 generates the management information of the content in the management information storage section 12. For generation of the management information, the content section 11 uses the details of the meta information such as the content ID.

The meta information here configures the appendix information coming together with the content, and the content section 11 configures appendix information reception section for receiving the meta information from the meta information server 8 (appendix information provision server), and management information generation section for generating the management information using the meta information.

The content section 11 includes a user interface for content activation and reproduction, and through this user interface, the list of the contents found in the management information storage section 12 can be displayed together with their management status.

The management status includes the content title, downloaded or not, license effective and expiration times and dates (if license has been acquired), booked or not, and the like.

When receiving from the user a command to purchase the license of a specific content in the list, the content section 11 downloads the corresponding license from the licenser server for storage into the content database 10.

After license purchase as such from the license server, the money is withdrawn from the user's bank account so that the purchase payment is made.

### 2. Content Reproduction

The content section 11 uses the user interface to display a list of contents already through with license acquisition.

The user interface may be configured to display the contents not yet through with license acquisition, or the contents themselves not yet acquired. With this being the case, the users will find it convenient if the acquisition status is displayed both for the licenses or the contents.

The user interface offers a list of reproducible contents for user selection. The user interface also includes an operation section for controlling reproduction of the content, e.g., play button, stop button, rewind button, fast-forward button, and the like. When the user operates this operation section, the content section 11 responsively reproduces or stops the content, for example.

As such, the content section 11 configures content means for receiving the contents from the content server 2 for use.

In a case where the content database 10 carries any specific downloaded content, the content section 11 reads out the content from the content database 10 for reproduction. If this content is subjected to streaming reproduction, the content section 11 is connected to the content server 2 for streaming distribution of the content, and reproduces the content in a sequential manner.

### 3. Content Operation

In addition to content reproduction, the content section 11 is capable of operating as commanded by the user through the user interface, e.g., content deletion, content booking, new purchase of content, and others.

For content deletion, the content, the meta information, the license, and others stored in the content section 11 are deleted therefrom.

For content booking for purchase, the meta information is downloaded in advance, and after the content is put on the market, the content is downloaded or streaming distributed.

For new purchase of content, the meta information and the content are both downloaded, and the license is also purchased.

For content operation, executed are commands coming through the user interface, and commands provided by the reference server 3, which will be described later.

In more detail, the reference server 3 is capable of receiving commands from the portable terminal 6 or the terminal 7 in the reference site for operating the content, and when the content terminal 5 polls the reference server 3, those operation commands are forwarded from the reference server 3 to the content terminal 5.

If an inconsistency arises between the user's operation command issued in the reference site for content deletion, and another in the user interface for content booking, for example, the content section 11 follows the command issued more recent of the two.

As such, when an inconsistency is observed for the operation commands issued in the reference site and the user interface, the content section 11 is capable of determining which comes first, i.e., giving a higher priority to the operation command issued more recent of the two.

### 4. Recording and Update of Management Information

As to the contents in hands, the content section 11 makes the management information storage section 12 store the management information indicating the management status of those contents. When the management status shows some change, the content section 11 updates the management information in accordance with the change details.

After downloading the meta information from the meta information server 8, the content section 11 adds, to the management information storage section 12, the management information of the content corresponding to the meta information. The content is then put under its management.

Therefore, the contents are not always downloaded even if those are under the management of the management information storage section 12.

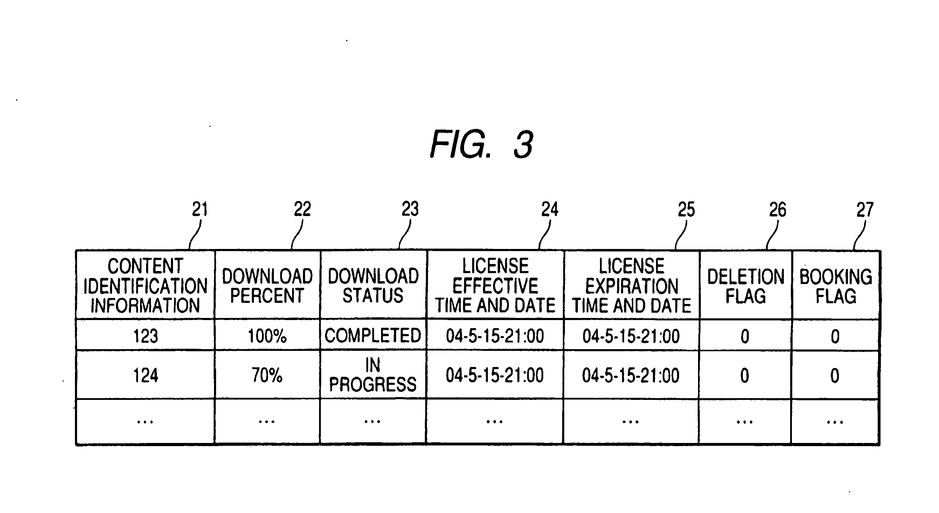

FIG. 3 shows an exemplary logical configuration of the management information. As shown in the drawing, the management information includes items of content identification information 21, download percent 22, download status 23, license effective time and date 24, license expiration time and date 25, deletion flag 26, booking flag 27, and others, those of which are provided on a content basis.

When any new content is put under the management of the content terminal 5, the management information of the content is added.

The content identification information 21 is for the use of content discrimination, and includes a content number, caption, and others.

The download percent 22 represents the download progress of the contents by percent.

Alternatively, the download progress may be represented by an estimated time for download completion, for example.

The download status 23 represents the download progress for the content. When the content is already downloaded, the item shows "completed", when the content is being downloaded, "in progress", and when the content is not yet downloaded, "not yet", for example.

The license effective time and date 24 indicates when and what time the license becomes effective.

The license expiration time and date 25 indicates when and what time the acquired license is to be expired. After the time and date set to the license expiration time and date 25, there needs to acquire a new license.

The license varies in type as such, and some are effective for a fixed period of time, and some are no-time-limit after the purchase.

When no license is purchased, the license effective time and date 24 and the license expiration time and date 25 are both left blank.

The deletion flag 26 indicates whether the downloaded content has been deleted or not. When the content is not deleted, the item shows "0", and when the content has been deleted, indicated is "1".

The user may delete the downloaded content(s) to increase the capacity of the storage unit or to eliminate any unnecessary content. The deletion flag 26 thus helps the users to see whether the content has been deleted or not.

The booking flag 27 indicates whether the content is booked for purchase or not. When the content is not yet booked, the item shows "0", and when the content is already booked, indicated is "1".

The user can book any soon-to-be-available content before its release date. The booking flag 27 thus helps the users to see whether the content is booked or not.

Referring back to FIGS. 2A and 2B, when the management status of the contents shows some change, the content section 11 updates the management information stored in the management information storage section 12 in accordance with the change details. Such a change occurs when any new content is put under the management of the content section 11, when the content download is started, when any new license is purchased, when any content is deleted, when any content is booked for purchase, and the like.

Here, the management information storage section 12 configures management information storage means, and the content section 11 configures management information update means for updating the management information when the management status of the contents shows some change.

Described next is the synchronization section 13.

The synchronization section 13 is connected to the reference server 3 to cooperate together therewith for operation, and establishes a synchronization of details between the management information stored in the management information storage section 12 and the reference information stored in the reference server 3.

When the content section 11 updates the management information stored in the management information storage section 12, the synchronization section 13 is connected to the reference server 3 for polling at a predetermined time, e.g., every hour. The synchronization section 13 then goes through a process together with the reference server 3 to establish a synchronization of details between the management information and the reference information.

After connected to the reference server 3, the synchronization section 13 forwards the user ID stored in the content section 11 to the reference server 3 for user identification therein.

The reference server 3 uses the user ID to check the reference information of the identified user, and when there is any operation command accepted in the reference site, forwards the command to the content terminal 5. The synchronization section 13 accepts the operation command.

After receiving the operation command from the reference server 3, the content section 11 executes the commanded operation details. The content section 11 then updates the management information stored in the management information storage section 12 so that the management information becomes the latest.

The synchronization section 13 forwards the latest management information to the reference server 3. Instead of forwarding the management information in its entirety to the reference server 3, the synchronization section 13 may forward only any change details, i.e., a difference observed to the management information after connected to the reference server 3.

As such, the synchronization section 13 configures updated detail transmission means for transmitting the updated details of the management information to the reference server 3.

The synchronization section 13 configures operation command reception means for receiving the operation commands from the reference server 3, and the content section 11 configures operation means for activating the contents in response to the received operation commands. The synchronization section 13 configures update means for updating the management information with the details operated by the operation means.

For a case where a command comes to the reference server 3 for addition of a content not yet managed by the management information of the content terminal 5, e.g., purchase of new content, the content section 11 is provided with additional storage section for making the management information storage section 12 additionally store the management information about such a content.

FIG. 2B is a block diagram schematically showing the function configuration of the reference server 3.

As shown in FIG. 2B, the reference server 3 is configured by a reference information database 18, a reference information update section 20, a reference site section 19, and others.

The reference information database 18 stores the reference information, which is used to refer to the details of the management information that is under the management of the content terminal 5 for the respective users. The reference information database 18 configures reference information storage means.

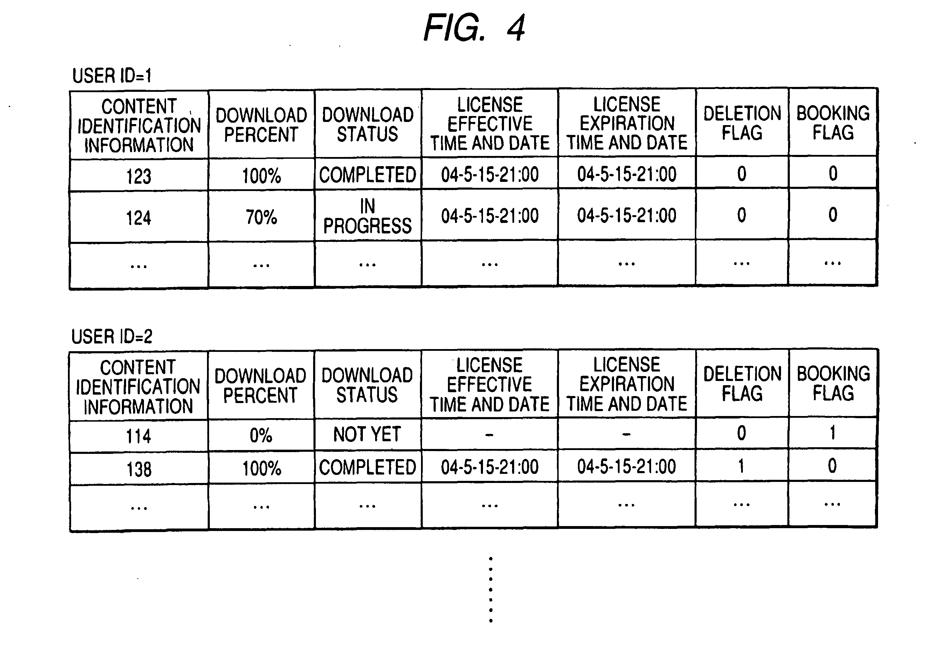

FIG. 4 shows the logical configuration of the reference information.

As shown in FIG. 4, the reference information is provided for every user using the user ID. The reference information of the respective users includes the same items as those in the management information shown in FIG. 3.

Referring back to FIG. 2B, the reference site section 19 offers a reference site to make the reference information available for viewing on the network 4.

The reference site section 19 accepts accesses from the portable terminal 6 and the terminal 7 (hereinafter, the portable terminal 6 will be mainly described) by a given URL or others, and offers various screens.

After accessed by the portable terminal 6, the reference site section 19 asks the user to forward his or her user ID and password. Using thus provided user ID and password, the reference site section 19 authenticates and identifies the user.

After user authentication, the reference site section 19 searches the reference information database 18 for the user's reference information.

Using thus found reference information, the reference site section 19 generates reference screen data for transmission to the portable terminal 6.

The portable terminal 6 uses the resulting reference screen data to generate a reference screen for display on a display unit exemplified by a display.

Here, the reference site section 19 configures both confirmation request accept means, and reference details transmission means. The confirmation request accept means accepts a request from the portable terminal 6 or others for checking the reference information, and the reference details transmission means forwards the details of the reference information to the portable terminal 6 or others.

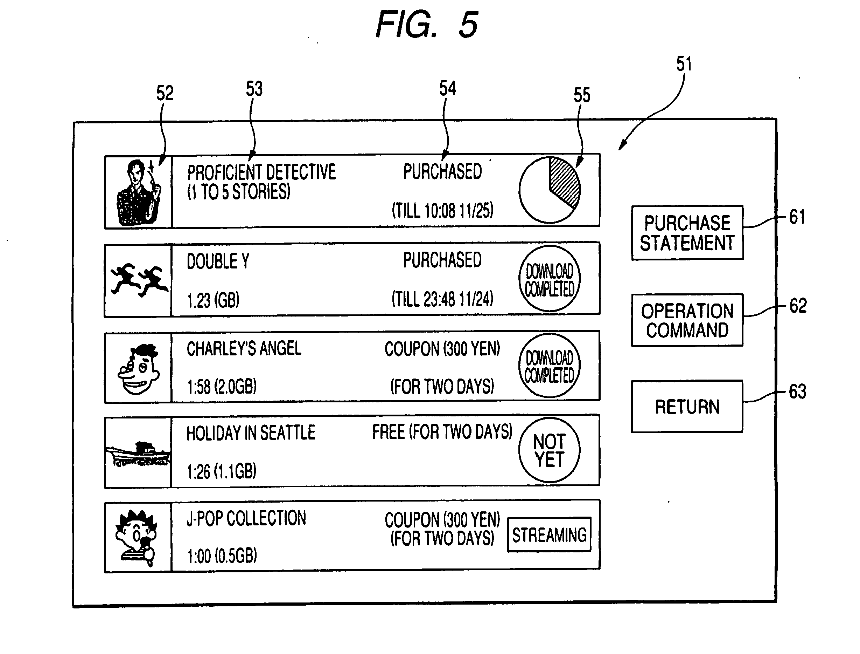

FIG. 5 shows an exemplary reference screen.

As shown in FIG. 5, the reference screen includes a content list section 51, a purchase statement button 61, an operation command button 62, a return button 63, and others.

The content list section 51 displays a list of contents found in the reference information, except for the deleted content(s) showing the deletion flag of "1".

The items listed by the content list section 51 include a thumbnail 52, a title 53, a purchase status 54, a download status 55, and the like.

The thumbnail 52 shows an image with which the content details are visualized. The reference server 3 stores image data in a corresponding manner to the content identification information, and the image to be displayed to the thumbnail 52 is configured by this image data.

The title 53 displays the title of the content. The reference server 3 stores title data in a corresponding manner to the content identification information, and the title indicated by the title 53 is configured by this title data.

The purchase status 54 indicates whether the license of the content is purchased or not, and the effective and expiration times and dates of the license. When the license is already purchased, the item indicates "purchased". The content system 1 offers a coupon to the users for use to purchase the content.

Although not described above, the management information of FIG. 3 and the reference information of FIG. 4 can include information about whether the user uses a coupon for content purchase, or about the remaining amount of the coupon after content purchase, for example.

If the user uses a coupon to buy a specific content, the purchase status 54 provides such an indication.

The download status 55 indicates whether the content has been downloaded or not, and if the content is being downloaded, the download progress or others are indicated.

Such display is made using information such as the download percent or download status of the reference information.

Although not described above, as to the management information of FIG. 3 and the reference information of FIG. 4, when the content is subjected to streaming distribution, such an indication is made.

If this content is the one for streaming reproduction, the download status 55 makes such an indication.

The purchase statement button 61 is used to jump to the screen displaying the user's purchase statement.

Although not shown in FIG. 2B, the reference server 3 includes data about the user's purchase statement, and when the user selects the purchase statement button 61, the reference server 3 responsively forwards the data of purchase statement to the portable terminal 6.

The operation command button 62 is used to jump to the screen for content operation. When the user selects the operation command button 62, the reference server 3 forwards the data of operation command to the portable terminal 6. The portable terminal 6 then uses thus provided data for display of the screen for operation command.

On the screen for operation command, the user can issue predetermined commands of content deletion, content booking, or others for the contents displayed on the reference screen. The user can also issue a command to purchase any new content.

The operation details made on the operation command screen are forwarded to the reference server 3.

The return button 63 is used to jump to the initial screen of the reference site.

Referring back to FIG. 2B, the reference site section 19 notifies the portable terminal 6 and the terminal 7 of the details of the reference information as such, and also accepts the operation commands from the portable terminal 6 and the terminal 7.

When accepting an operation command from the user, the reference site section 19 updates the reference information stored in the reference information database 18 in such a manner as to reflect the operation command.

As such, the reference site section 19 configures operation command accept means for accepting the operation commands from the portable terminal 6 or others.

The reference site section 19 also configures reference information update means for updating the reference information using the accepted operation commands.

When accepting a command for adding any content not found in the reference information, i.e., a command for purchasing any new content, the reference site section 19 additionally stores the command to the reference information for transmission to the content terminal 5.

If the user issues a command for deleting any specific content, for example, the deletion flag for the content is set to "1". If the user issues a command for booking any specific content, the booking flag for the content is set to "1", and if with a command for purchasing any specific new content, the information indicating as such is added.

The reference information update section 20 accepts a polling connection from the synchronization section 13 so as to establish a synchronization of details between the reference information and the management information.

When accepting the connection from the synchronization section 13, the reference information update section 20 forwards the user's operation command to the synchronization section 13. More in detail, forwarded to the synchronization section 13 may be the user's reference information, or only the operation command.

As such, the reference information update section 20 configures operation command transmission means for forwarding the operation commands accepted from the portable terminal 6 or others to the content terminal 5.

The reference information update section 20 receives the latest management information from the synchronization section 13, and updates the reference information in such a manner as to match it to the received management information. As such, the reference information update section 20 configures reference information update means.

In the above, the management information of FIG. 3 and the reference information of FIG. 4 have the same items. This is not restrictive, and the reference information does not necessarily carry all the items of the management information. The items of the reference information may be set as those for notification to the user, or for reception of the operation commands.

With this being the case, the reference information update section 20 refers to the management information for every item of the reference information, and updates the reference information to be the latest.

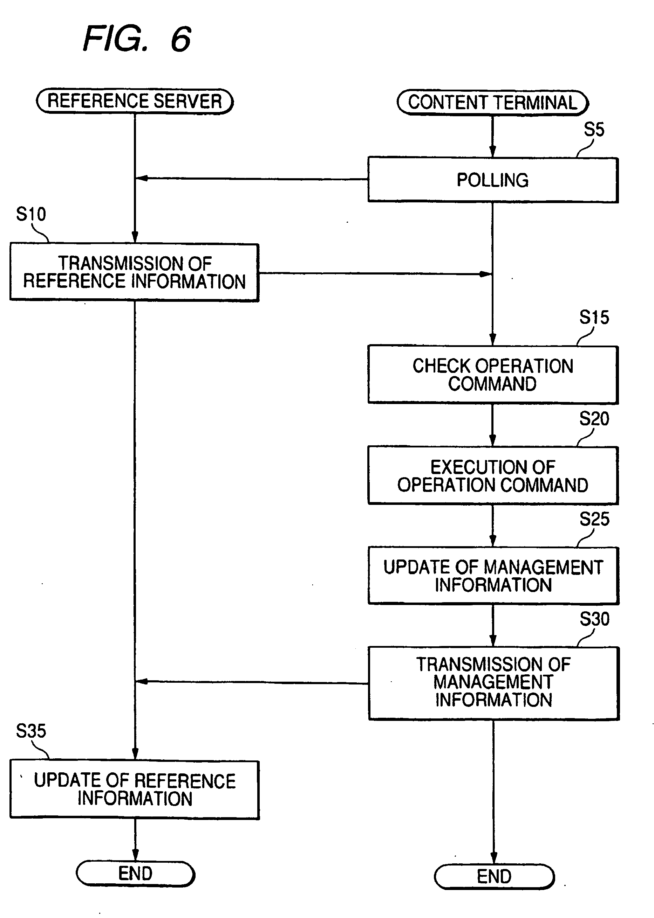

By referring to the flowchart of FIG. 6, described next is the procedure of establishing a synchronization of information details between the reference server 3 and the content terminal 5.

First of all, the content terminal 5 is connected to the reference server 3 to start polling (step 5).

At this time, the content terminal 5 forwards a user ID to the reference server 3.

The reference server 3 receives the user ID from the content terminal 5. The reference server 3 then searches the reference information database 18 for the reference information corresponding to the user ID for transmission to the content terminal 5 (step 10).

The content terminal 5 receives the reference information from the reference server 3 for use to check whether there is any operation command issued by the user (step 15).

In step 15, for example, a comparison is made between the reference information received from the reference server 3, and the management information stored in the content terminal 5 for any possible item for operation commands. Here, the items possible for operation commands are predetermined such as content deletion, content booking, or others.

When some disparity is observed for a specific item, it is determined that the user has issued an operation command thereto.

There may be a case where some inconsistency arises between the operation command found in the reference information and that in the management information. Accordingly, the content terminal 5 compares between the update time and date for the reference information and that for the management information so as to adopt the operation command that is more recent of the two.

Alternatively, in any other manner, the operation command issued in the content terminal 5 and the operation command issued in the reference server 3 may be assigned with priorities.

In this example, presumably, a user's operation command is found in the reference information, and this command is adopted.

The content terminal 5 then executes the operation command found in the reference information, and accordingly goes through content deletion, content booking, or the like (step 20).

The content terminal 5 then updates the management information in such a manner as to reflect the management status showing some change due to operation (step 25), and forwards the resulting management information to the reference server 3 (step 30).

The reference server 3 receives the management information from the content terminal 5, and updates the user's reference information to match it to the management information (step 35).

Although not shown, after receiving a notification from the reference server 3 telling that the reference information is completely updated, the content terminal 5 cuts off the connection with the reference server 3.

As such, the reference server 3 and the content terminal 5 can establish a synchronization of details between the management information and the reference information.

In step 15, when no user's operation command is found in the reference information, the management information in storage is forwarded to the reference server 3 as it is (step 30) without executing the operation command (step 20) or updating the management information (step 25).

In the above, the reference server 3 forwards the reference information to the content terminal 5, and the content terminal 5 forwards the management information to the reference server 3. This is not restrictive, and instead of forwarding entirely the reference information and the management information, only a difference observed from the last polling to the current polling may be forwarded.

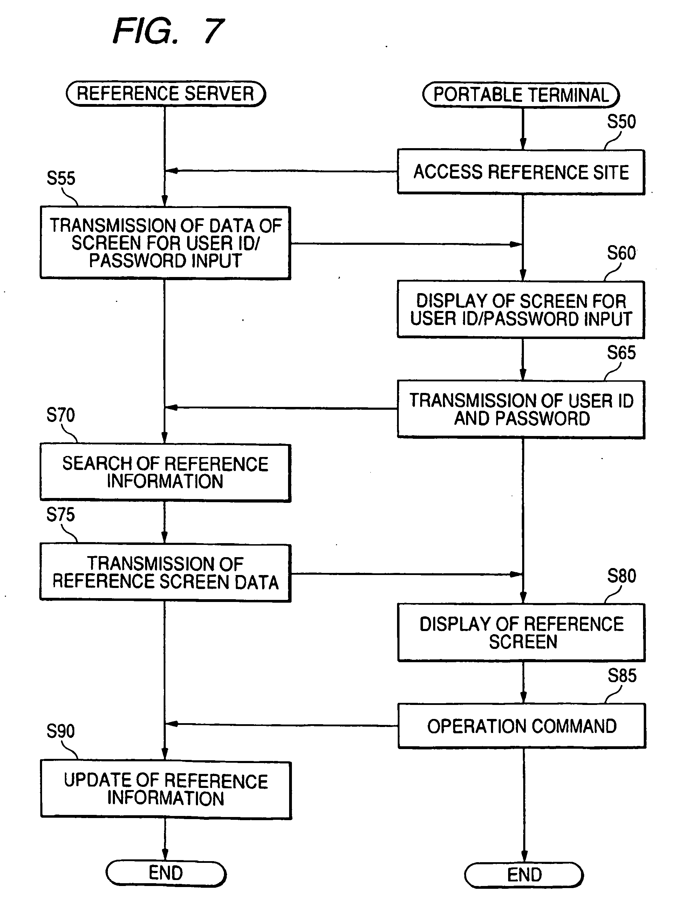

By referring to the flowchart of FIG. 7, described next is the user's procedure of making an access to the reference site from the portable terminal 6 (or the terminal 7).

First of all, the user establishes a connection with the reference server 3 by making an input of URL of the reference site from the portable terminal 6, for example (step 50).

After accepting the access in the reference site, the reference server 3 forwards data of screen for inputting user ID and password to the portable terminal 6 (step 55).

The portable terminal 6 receives the screen data from the reference server 3 for use to display a screen for inputting the user ID and the password (step 60).

While looking at this screen, the user operates the portable terminal 6 to input his or her user ID and password for transmission to the reference server 3 (step 65).

After receiving the user ID and the password from the portable terminal 6, the reference server 3 performs user authentication by comparing those with the user ID and the password in storage.

If the user is identified by the user authentication as such, the reference server 3 then searches the reference information database 18 for the user's reference information (step 70). The reference server 3 uses thus found reference information to generate reference screen data, and forwards the data to the portable terminal 6 (step 75).

The portable terminal 6 receives the reference screen data from the reference server 3 for use to display the reference screen (step 80).

Thanks to the synchronization of details established between the reference information and the management information, the user can check the details of the management information in the content terminal 5 by looking at the reference screen.

When the user wants to issue an operation command such as content deletion, he or she jumps to the content operation screen for input of the operation command for the content. In this example, presumably, the user inputs an operation command, and the portable terminal 6 forwards the user-input operation command to the reference server 3 (step 85).

Using the operation command provided by the portable terminal 6, the reference server 3 updates the user's reference information (step 90).

Although not shown, the reference information 3 notifies the portable terminal 6 that the operation command is entered, and the portable terminal 6 cuts off the connection with the reference server 3.

As such, using the portable terminal 6, the user can check the management status of his /her content(s) in the content terminal 5, and issues operation commands to the content(s).

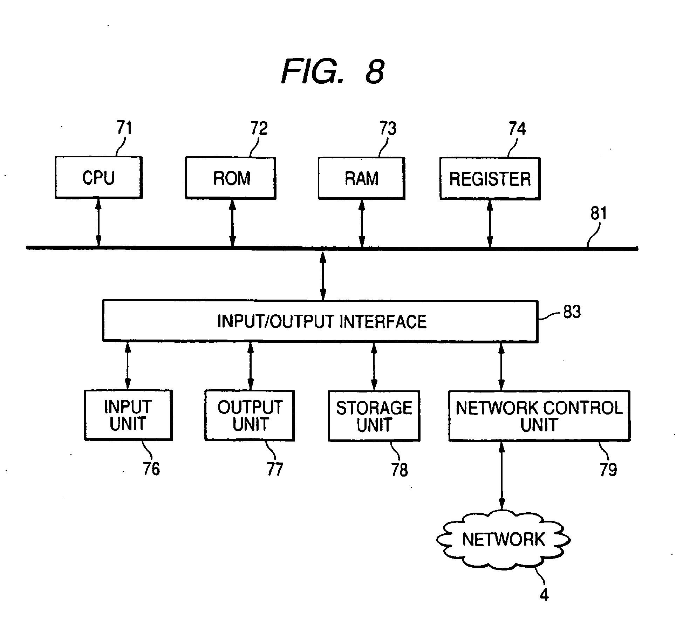

By referring to FIG. 8, described next is the hardware configuration of the content terminal 5.

In the content terminal 5, a connection is established via a bus line 81 among a CPU (Central Processing Unit) 71, ROM (Read Only Memory) 72, RAM (Random Access Memory) 73, a register 74, and an input/output interface 83.

The content terminal 5 is configured by a personal computer, a game machine, or set-top box, for example.

The CPU 71 is a central processing unit for executing various processes by following programs stored in the ROM 72, the RAM 73, a storage unit 78, and others.

The CPU 71 serves to establish a synchronization of details between the management information and the reference information through communications with the reference server 3, or updates the management information by keeping track of the management status of the contents.

The CPU 71 also communicates with the content server 2, the meta information server 8, the license server, and others for receiving the contents, the meta information, and the licenses, and reproduces the contents based on the license.

The ROM 72 is Read-Only Memory, storing any basic programs and parameters needed to function the content terminal 5.

The RAM 73 is Random-Access Memory that is data writable and erasable thereto/therefrom. The RAM 73 serves as working memory when the CPU 71 goes through a synchronization process between the management information and the reference information, or goes through content reproduction.

The register 74 is memory for temporarily storing data for the CPU 71 to execute information processing at high speed.

The input/output interface 83 mediates inputs and outputs among the peripheral equipment including an input unit 76, an output unit 77, the storage unit 78, a network control unit 79, and others.

The input unit 76 is configured by an input device such as keyboard, mouse, or joy stick, and the user uses such a device for information input to the content terminal 5.

With such a configuration, the management information becomes available for viewing, operation commands are issued for contents, or the contents are reproduced.

The output unit 77 is configured by an output device such as display, speaker, or printer, and the contents become available by the user recognizing information coming from such a device.

For example, for reproduction of book contents, static contents, dynamic contents, and others, a display shows texts, still images, and moving images, and those can be output from a printer. For reproduction of music contents, a speaker outputs music.

The storage unit 78 is of large capacity configured by a hard disk drive, for example, and is capable of data reading and writing by the CPU 71.

In addition to the hard disk, the storage unit 78 may also be configured by any other types of storage medium including magneto-optical disk, magnetic disk, semiconductor storage device or others, and a storage medium drive for driving the storage medium.

The storage unit 78 stores an OS (operating system), a communications program, a content program, the content database 10, and others. Here, the OS is for implementing such basic functions as file input/output process in the content terminal 5. The communications program is for carrying out communications with the reference sever 3 and any other servers, and the content program is for using the contents.

By the CPU 71 executing the content program, configured are the content section 11, the management information storage section 12, the synchronization section 13, and others.

The network control unit 79 is configured by a communications control device exemplified by a modem. The network control unit 79 establishes a connection between the content terminal*'*5 and the network 4 to exercise control over the communications via the network 4.

Although not shown, the bus line 81 may be connected with a storage medium drive detachable with a storage medium such as semiconductor memory, magneto-optical disk, or magnetic disk, and the CPU 71 may perform data reading and writing to/from the storage medium via the storage medium drive.

Through such a storage medium, it is possible to provide the content terminal 5 with the contents, the meta information, the licenses, or others.

The configuration of the content terminal 5 is described above, and the hardware configuration of the components, i.e., the reference server 3, the content server 2, the meta information server 8, the license server, the portable terminal 6, the terminal 7, and others, is basically similar to the content terminal 5.

By the present embodiment described above, the following effects can be successfully derived.
1. By making an access to a reference site of the reference server 3, users can see the management status of their contents under the management of the content terminal 5.
2. Through communications between the reference server 3 and the content terminal 5, a synchronization of details can be established between reference information and management information.
3. By making an access to the reference site, the users can issue operation commands relating to the contents to the content terminal 5.
4. With the management information stored also on the end of the reference server 3, the management information can be easily restored even if the content terminal 5 goes down, or the content terminal 5 is transferred to any other client terminal.
5. As indicating the management status of the users' contents, the reference information can be used for user management by content providers or others.

It should be understood by those skilled in the art that various modifications, combinations, sub-combinations and alterations may occur depending on design requirements and other factors insofar as they are within the scope of the appended claims.

## Claims

1. A content system including:
a content terminal (5), operable by a user, for receiving a content from a content server (2), and
a reference server (3) for providing selective access to reference information indicative of a management status of content under management by said content terminal (5); wherein:
the content terminal (5) is adapted to manage content in accordance with said user's commands, to generate, update and store management information indicating the management status of the content, and to transmit to said reference server management information generated thereby and updated management information, said management information including one or more items selected in the group consisting of: information identifying content under management by the content terminal (5), appendix information associated with content, data indicative of the acquisition status of a license associated with content, data indicative of the download status of content, data indicative of the deleted status of content, and data indicative of the booked-for-reception status of content, and
the reference server (3) is adapted to store reference information generated by said content terminal and received from said content terminal (5), said reference information corresponding to a subset of said management information, to maintain a synchronization of details between the reference information stored at the reference server and the management information stored at the content terminal through communications with the content terminal (5), and to give said user permission to view details of the reference information resulting from the synchronization of details, via a terminal (6,7) different from said content terminal.

2. A content terminal (5) operable by a user and adapted to manage content in accordance with said user's commands, said content terminal (5) comprising:
content means (11) for receiving a content from a content server;
a management information generation section (11) adapted to generate
management information indicating a management status of the content under management by said content terminal, said management information including one or more items selected in the group consisting of: information identifying content under management by the content terminal (5), appendix information associated with content, data indicative of the acquisition status of a license associated with content, data indicative of the download status of content, data indicative of the deleted status of content, and data indicative of the booked-for-reception status of content;
management information storage means (12) for storing the generated management information;
management information update means (11) for updating the stored management information when a change occurs in the management status of the content;
management information transmission means (13) for transmitting generated management information and updated management information details to a reference server (3) in charge of managing selective access by said user, from a terminal different (6,7) from said content terminal, to reference information corresponding to a subset of details of the management information.

3. The content terminal (5) according to claim 2, comprising:
appendix information reception means (11) for receiving, from an appendix information provision server (8), appendix information associated with the content provided by the content server (2); and
management information generation means (11) for generating management information based on the received appendix information and the management status of the content, wherein
the management information storage means (12) is adapted to store management information generated by the management information generation means (11).

4. The content terminal (5) according to claim 3, comprising:
operation command reception means (13) for receiving, from the reference server (3), an operation command received by the reference server (3) from a different terminal (6) from said content terminal, said operation command being applicable to a particular content associated with reference information;
operation means (11) for executing an operation for said particular content in accordance with the received operation command; and
update means (11) for updating the management information of said particular content stored by the management information storage means in accordance with the executed operation.

5. The content terminal (5) according to claim 3, comprising
means (11) for determining whether or not management information is already stored in the management information storage means in respect of particular content associated with a received operation command, and
additional storage means for making the management information storage means additionally store the management information of said particular content when the determining means determines that management information of said particular content is not yet stored in the management information storage means (12).

6. A reference server (3), comprising:
management information reception means for receiving, from a content terminal (5) for managing a content in accordance with commands from a user, management information generated by said content terminal (5) and updated management information details derived by the content terminal (5) updating the details of the management information, said management information being indicative of the management status of content under management by said content terminal and including one or more items selected in the group consisting of: information identifying content under management by the content terminal (5), appendix information associated with content, data indicative of the acquisition status of a license associated with content, data indicative of the download status of content, data indicative of the deleted status of content, and data indicative of the booked-for-reception status of content;
reference information storage means (18) for storing reference information indicative of a subset of details of said management information generated by the content terminal (5);
reference information update means (20) for updating the stored reference information using the received updated details; and
selective access-control means adapted to allow said user access to the reference information via a terminal (6,7) different from said content terminal.

7. The reference server (3) according to claim 6, comprising:
check request accept means for accepting a check request from said user from said different terminal (6,7), said check request being a request by said user to check the stored reference information; and
reference details transmission means for transmitting, to said different terminal (6,7), details of the reference information in accordance with the accepted check request.

8. The reference server (3) according to claim 6 or 7, comprising:
operation command accept means for accepting, from said different terminal (6,7), an operation command for a particular content associated with reference information; and
operation command transmission means for transmitting the accepted operation command to the content terminal (5), wherein
the reference information update means (20) is adapted to update the stored reference information in accordance with the accepted operation command.

9. The reference server (3) according to claim 8, wherein
the operation command accept means Is adapted to accept, from said different terminal (6,7), an operation command for a particular content not associated with reference information already stored in the reference server (3),
the operation command transmission means is adapted to transmit, to the content terminal (5), the operation command for said particular content not associated with reference information already stored in the reference server (3), and
the reference information update means (20) is adapted to make the reference information storage means (18) additionally store the reference information of said particular content not associated with reference information already stored in the reference server (3).

10. A computer program to, when loaded into a computer and executed therein, perform the steps of:
receiving a content from a content server (2) in accordance with an instruction from a user;
generating management information indicating a management status of the content, said management information including one or more items selected in the group consisting of: information identifying content under management by the content terminal (5), appendix information associated with content, data indicative of the acquisition status of a license associated with content, data indicative of the download status of content, data indicative of the deleted status of content, and data indicative of the booked-for-reception status of content;
storing said generated management information;
transmitting said generated management information to a reference server (3) in charge of managing selective access by said user, via a terminal (6,7) different from said content terminal (5), to reference information corresponding to a subset of details of the management information;
updating the stored management information when a change occurs in the management status of the content; and
transmitting updated management information details to said reference server (3).

11. The computer program according to claim 10 to, when loaded into a computer and executed therein, perform the steps of:
receiving, from an appendix information provision server (8), appendix information associated with the content provided by the content server (2); and
generating the management information based on the received appendix information and the management status of the content.

12. The computer program according to claim 11, to, when loaded into a computer and executed therein, perform the steps of:
receiving, from the reference server (3), an operation command received by the reference server (3) from said different terminal (6,7) , said operation command being applicable to a particular content associated with reference information;
executing an operation for said particular content in accordance with the received operation command; and
updating the management information of said particular content, stored in the management information storage step, in accordance with the executed operation.

13. The computer program according to claim 11 to, when loaded into a computer and executed therein, perform the steps of:
determining whether or not management information is already stored in the management information storage means (12) in respect of particular content associated with a received operation command; and
making the management information storage step additionally store the management information of said particular content when the determining step determines that the management information of said particular content has not yet been stored in the management information storage step.

14. A computer program, to, when loaded into a computer and executed therein, perform the steps of:
receiving, from a content terminal (5) for managing a content in accordance with commands from a user, management information generated by said content terminal (5) and updated details derived by the content terminal (5) updating the details of the management information, said management information including one or more items selected in the group consisting of: information identifying content under management by the content terminal (5), appendix information associated with content, data indicative of the acquisition status of a license associated with content, data indicative of the download status of content, data indicative of the deleted status of content, and data indicative of the booked-for-reception status of content;
storing reference information indicative of a subset of details of said management information generated by the content terminal (5);
updating the stored reference information using the received updated details; and
selectively providing said user with access to the reference information via a terminal (6,7) different from said content terminal (5).

15. The computer program according to claim 14, to, when loaded into computer and executed therein, perform the steps of:
accepting a check request from said different terminal (6,7), said check request being a request by said user for checking the stored reference information; and
transmitting, to said different terminal (6,7), details of the reference information in accordance with the accepted check request.

16. The computer program according to claim 14, to, when loaded into a computer and executed therein, perform the steps of:
accepting, from said different terminal (6,7), an operation command for a particular content associated with reference information; and
transmitting the accepted operation command to the content terminal (5), wherein
the reference information update step comprises updating the stored reference information in accordance with the accepted operation command.

17. The computer program according to claim 16, wherein the operation command accepting step comprises accepting, from said different terminal (6,7), an operation command for a particular content not associated with reference information already stored in the reference server (3),
the operation command transmission step comprises transmitting, to the content terminal (5), the operation command for said particular content not associated with reference information already stored in the reference server (3), and
the reference information updating step comprises making the reference information storage step additionally store the reference information of said particular content not associated with reference information already stored in the reference server (3).

## Patentansprüche

1. Inhaltssystem, welches umfasst:
ein Inhaltsendgerät (5), welches durch einen Benutzer betätigbar ist, um einen Inhalt von einem Inhaltsserver (2) zu empfangen, und
einen Referenzserver (3) zum selektiven Zugriff auf Referenzinformation, welche für einen Verwaltungsstatus des Inhalts bezeichnend ist, unter Verwaltung durch das Inhaltsendgerät (5); wobei
das Inhaltsendgerät (5) eingerichtet ist, Inhalt gemäß den Benutzerbefehlen zu verwalten, um Verwalumgsinformation, welche den Verwaltungsstatus des Inhalts zeigt, zu erzeugen, zu aktualisieren und zu speichern, und um zum Referenzserver Verwaltungsinformation, welche **dadurch** erzeugt wird, und aktualisiert Verwaltungsinformation zu übertragen, wobei die Verwaltungsinformation einen oder mehrere Posten umfasst, welche in der Gruppe ausgewählt werden, die besteht aus:
Information, welche Inhalt unter Verwaltung durch das Inhaltsendgerät (5) identifiziert, Anhanginformation in Verbindung mit dem Inhalt, Daten, welche für den Erwerbsstatus einer Lizenz in Verbindung mit dem Inhalt bezeichnend sind, Daten, weiche für den Herunterladestatus von Inhalt bezeichnend sind, Daten, welche für den Löschstatus von Inhalt bezeichnend sind, und Daten, welche für den gebuchten Empfangsstatus von Inhalt bezeichnend sind, und
der Referenzserver (3) eingerichtet ist, Referenzinformation zu speichern, welche durch das Inhaltsendgerät erzeugt wird und welche vom Inhaltsendgerät (5) empfangen wird, wobei die Referenzinformation einem Hilfssatz der Verwaltungsinformation entspricht, um eine Synchronisation von Details zwischen der Referenzinformation, welche im Referenzserver gespeichert ist, und der Verwaltungsinformation, welche im Inhaltsendgerät gespeichert ist, über Kommunikationen mit dem Inhaltsendgerät (5) aufrecht zu erhalten, und dem Benutzer Erlaubnis zu erteilen, Details der Referenzinformation, welche aus der Synchronisation von Details resultiert, über ein Endgerät (6, 7), welches gegenüber dem Inhaltsendgerät verschieden ist, zu betrachten.

2. Inhaltsendgerät (5), welches durch einen Benutzer betätigbar ist und eingerichtet ist, Inhalt gemäß den Benutzerbefehlen zu verwalten, wobei das Inhaltsendgerät (5) umfasst:
eine Inhaltseinrichtung (5) zum Empfangen eines Inhalts von einem Inhaltsserver;
einen Verwaltungsinformations-Erzeugungsabschnitt (11), der eingerichtet ist, zu erzeugen:
Verwaltungsinformation, welche einen Verwaltungsstatus des Inhalts zeigt, unter Verwaltung durch das Inhaltsendgerät, wobei die Verwaltungsinformation einen oder mehrere Posten umfasst, welche in der Gruppe ausgewählt werden, die besteht aus: Information, welche Inhalt unter Verwaltung durch das Inhaltsendgerät (5) identifiziert, Anhanginformation in Verbindung mit dem Inhalt, Daten, welche für den Erwerbsstatus einer Lizenz in Verbindung mit dem Inhalt bezeichnend sind, Daten, welche für den Herunterladestatus des Inhalts bezeichnend sind, Daten, welche für den Löschstatus des Inhalts bezeichnend sind, und Daten, welche für den gebuchten Empfangsstatus von Inhalt bezeichnend sind;
eine Verwaltungsinformations-Speichereimichtung (12) zum Speichern der erzeugten Verwaltungsinformation;
eine Verwaltungsinformations-Aktualisierungseinrichtung (11) zum Aktualisieren der gespeicherten Verwaltungsinformation, wenn eine Änderung im Verwaltungsstatus des Inhalts auftritt;
eine Verwaltungsinformations-Übertragungseinrichtung (13) zum Übertragen erzeugter Verwaltungsmformation und aktualisierter Verwaltungsinformations-Details zu einem beauftragten Referenzserver (3), um selektiven Zugriff durch den Benutzer von einem Endgerät (6, 7), welches gegenüber dem Inhaltsendgerät verschieden ist, auf Referenzinformation, welche einem Hilfssatz von Details der Verwaltungsinformation entspricht, zu verwalten.

3. Inhaltsendgerät (5) nach Anspruch 2, welches umfasst: eine Anhanginformations-Empfangseinrichtung (11), um von einem Anhanginformations-Bereitstellungsserver (8) Anhanginformation in Verbindung mit dem Inhalt zu empfangen, der durch den Inhaltsserver (2) bereitgestellt wird; und
eine Verwaltungsinformations-Erzeugungseinrichtung (11) zum Erzeugen von Verwaltuggsinformation auf Basis der empfangenen Anhanginformation und des Verwaltungsstatus des Inhalts, wobei
die Verwaltungsinformations-Speichereinrichtung (12) eingerichtet ist, Verwaltungsinformation, welche durch die verwaltungsinformations-Erzeugungseinrichtung (11) erzeugt wird, zu speichern.

4. Inhaltsendgerät (5) nach Anspruch 3, welches umfasst:
eine Betätigungsbefehls-Empfangseinrichtung (13), um von einem Referenzserver (3) einen Betätigungsbefehl zu empfangen, der durch den Referenzserver (3) von einem anderen Endgerät (6) vom Inhaltsendgexät empfangen wird, wobei der Betätigungsbefehl auf einen bestimmten Inhalt in Verbindung mit Referenzinfarmation anwendbar ist;
eine Betätigungseinrichtung (11) zum Ausführen einer Betätigung für den bestimmten Inhalt gemäß dem empfangenen Betätigungsbefehl; und
eine Aktualisierungseinrichtung (11) zum Aktualisieren der Verwaltungsinformation des bestimmten Inhalts, der durch die Verwaltungsinformations-Speichereinrichtung gespeichert ist, gemäß der ausgeführten Betätigung.

5. Inhaltsendgerät (5) nach Anspruch 3, welches umfasst;
eine Einrichtung (11), um zu bestimmen, ob oder nicht Verwaltungsinformation schon in der Verwaltungsinformations-Speichereinrichtung in Bezug auf einen bestimmten Inhalt in Verbindung mit einem empfangenen Betätigungsbefehl gespeichert ist, und
eine Zusatzspeichereinrichtung, um zu veranlassen, dass die Verwaltungsinformations-Speichereinrichtung zusätzlich die Verwaltungsinformation des bestimmten Inhalts speichert, wenn die Bestimmungseinrichtung bestimmt, dass Verwaltungsinformation des bestimmten Inhalts noch nicht in der Verwaltungsinformations-Speichereinrichtung (12) gespeichert ist.

6. Referenzserver (3), der umfasst:
eine Verwaltungsinformations-Empfangseinrichtung, um von einem Inhaltsendgerät (5) zur Verwaltung eines Inhalts gemäß Befehlen von einem Benutzer Verwaltungsinformation, welche durch das Inhaltsendgerät (5) erzeugt wird, und aktualisierte Verwaltungsinformations-Details, welche durch das Inhaltsendgerät (5) hergeleitet werden, zu empfangen, welches die Details der Verwaltungsinformation, wobei die Verwaltungsinformation für den Verwaltungsstatus des inhalts bezeichnend sind, unter Verwaltung durch das Inhaltsendgerät aktualisiert und einen oder mehrere Posten umfasst, welche in der Gruppe ausgewählt werden, welche besteht aus:
Information, welche Inhalt unter Verwaltung durch das Inhaltsendgerät (5) identifiziert, Anhanginformation in Verbindung mit Inhalt, Daten, welche für den Erwerbsstatus einer Lizenz in Verbindung mit Inhalt bezeichnend sind, Daten, welche für den Herunterladestatus von Inhalt bezeichnend sind, Daten, welche für den Löschstatus des Inhalts bezeichnend sind, und Daten, welche für den gebuchten Empfangsstatus von Inhalt bezeichnend sind;
eine Referenzinformations-Speichereinrichtung (18) zum Speichern von Referenzinformation, welche für einen Hilfssatz von Details der Verwaltungsinformation, welche durch das Inhaltsendgerät (5) erzeugt wird, bezeichnend ist;
eine Referenzinformations-Aktualisiertungseinrichtung (20) zum Aktualisieren der gespeicherten Referenzinformation unter Verwendung der empfangenen aktualisierten Details; und
eine Selektivzugriff-Steuereinrichtung, die eingerichtet ist, dem Benutzer Zugriff auf die Referenzinformation über ein Endgerät (6, 7), welches vom Inhaltsendgerät verschieden ist, zu erlauben.

7. Referenzserver (3) nah Anspruch 6, welcher umfasst:
eine Prüfanforderungs-Akzeptierungseinrichtung zum Akzeptieren einer Prüfanforderung vom Benutzer von dem anderen Endgerät (6, 7), wobei die Prüfanforderung eine Anforderung durch den Benutzer ist, um die gespeicherte Referenzinformation zu prüfen; und
eine Referenzdetail-Übertragungseinrichtung zum Übertragen - zum anderen Endgerät (6, 7) - von Details der Referenzinformation gemäß der akzeptierte Prüfanforderung.

8. Referenzserver (3) nach Anspruch 6 oder 7, der umfasst:
eine Betätigungsbefehls-Akzeptierungseinnchtung zum Akzeptieren - von dem anderen Endgerät (6, 7) - eines Betätigungsbefehls für einen bestimmten Inhalt in Verbindung mit Referenzinformation; und
eine Betätigungsbefehls-Übertragungseinrichtung zum Übertragen des akzeptierten Betätigungsbefehls zum Inhaltsendgerät (5), wobei
die Referenzinformations-Aktualisierungseinrichtung (20) eingerichtet ist, die gespeicherte Referenzinformation gemäß dem akzeptierten Betätigungsbefehl zu aktualisieren.

9. Referenzserver (3) nach Anspruch 8, wobei die Betätigungsbefehls-Akzeptierungseinrichtung eingerichtet ist, vom anderen Endgerät (6, 7) einen Betätigungsbefehl, für einen bestimmten Inhalt zu akzeptieren, der nicht mit der Referenzinformation verknüpft ist, welche schon im Referenzserver (3) gespeichert ist,
die Betätigungsbefehls-Übertragungseinrichtung eingerichtet ist, zum Inhaltsendgerät (5) den Betätigungsbefehl für den bestimmten Inhalt zu übertragen, der nicht mit der Referenzinformation verknüpft ist, welche schon im Referenzserver (3) gespeichert ist, und
die Referenzinformations-Aktualisierungseinrichtung (20) eingerichtet ist, zu veranlassen, dass die Referenzinformations-Speichereinrichtung (18) zusätzlich die Referenzinformation des bestimmten Inhalts speichert, der nicht in Verbindung mit der Referenzinformation verknüpft ist, welche schon im Referenzserver (3) gespeichert ist.

10. Computerprogramm, um, wenn in einen Computer geladen und darin ausgeführt, die folgenden Schritte durchzuführen:
Empfangen eines Inhalts von einem Inhaltsserver (2) gemäß einer Instruktion von einem Benutzer;
Erzeugen von Verwaltungsinformation, welche einen Verwaltungsstatus des Inhalts zeigt, wobei die Verwaltungsinformation einen oder mehrere Posten umfasst, welche in der Gruppe ausgewählt werden, welche besteht aus: Information, welche Inhalt unter Verwaltung durch das Inhaltsendgerät (5) identifiziert, Anhanginformation in Verbindung mit Inhalt, Daten, welche für den Erwerbsstatus einer Lizenz in Verbindung mit Inhalt bezeichnend sind, Daten, welche für den Herunterladestatus von Inhalt bezeichnend sind, Daten, welche für den Löschstatus von Inhalt bezeichnend sind, und Daten, welche für den gebuchten Empfangsstatus von Inhalt bezeichnend sind;
Speichern der erzeugten Verwaltungsinformation;
Übertragen der erzeugten Verwaltungsinformation zu einem beauftragten Referenzserver (3), um selektiven Zugriff durch den Benutzer über ein Endgerät (6, 7), welches vom Inhaltsendgerät (5) verschieden ist, auf Referenzinformation, welche einem Hilfssatz von Details der Verwaltungsinformation entspricht, zu verwalten;
Aktualisieren der gespeicherten Verwaltungsinformation, wenn eine Änderung im Verwaltungsstatus des Inhalts auftritt; und
Übertragen von aktualisierten Verwaltungsinformations-Details zum Referenzserver (3).

11. Computerprogramm nach Anspruch 10, um, wenn in einen Computer geladen und darin ausgeführt, folgende Schritte durchzuführen:
Empfangen - von einem Anhanginformatiations-Bereitstellungsserver (8) - von Anhanginformation in Verbindung mit dem Inhalt, der durch den Inhaltsserver (2) bereitgestellt wird; und
Erzeugen der Verwaltungsinformation auf Basis der empfangenen Anhanginformation und des Verwaltungsstatus des Inhalts.

12. Computerprogramm nach Anspruch 11, um, wenn in einen Computer geladen und darin ausgeführt, folgende Schritte durchzuführen:
Empfangen - von dem Referenzserver (3) - eines Betätigtungsbefehls, der durch den Referenzserver (3) vom anderen Endgerät (6, 7) empfangen wird, wobei der Betätigungsbefehl auf einen bestimmten Inhalt in Verbindung mit Referenzinformation anwendbar ist;
Ausführen einer Betätigung für den bestimmten Inhalt gemäß dem empfangenen Betätigungsbefehl; und
Aktualisieren der Vewaltungsinformation des bestimmten Inhalts, der im Verwaltungsinformations-Speicherschritt gespeichert ist, gemäß der ausgeführten Betätigung.

13. Computerprogramm nach Anspruch 11, um, wenn in einen Computer geladen und darin ausgeführt, folgende Schritte durchzuführen:
Bestimmen, ob oder nicht Verwaltungsinformation schon in der Verwaltungsinformations-Speichereinrichtung (12) in Bezug auf einen bestimmten Inhalt in Verbindung mit einem empfangenen Betätigungsbefehl gespeichert ist; und
Veranlassen, dass der Verwaltungsinformations-Speicherschritt zusätzlich die Verwaltungsinformation des bestimmten Inhalts speichert, wenn der Bestimmungsschritt bestimmt, dass die Verwaltungsinformation des bestimmten Inhalts noch nicht im Verwaltungsizformations-Speichorschritt gespeichert ist.

14. Computerprogramm, um, wenn in einen Computer geladen und darin ausgeführt, folgende Schritte auszuführen:
Empfangen - von einem Inhaltsendgerät (5) zur Verwaltung eines Inhalts gemäß Befehlen von einem Benutzer - von Verwaltungsinformation, welche durch das Inhaltsendgerät (5) erzeugt wird, und von aktualisierten Details, welche durch das Inhaltsendgerät (5) hergeleitet werden, welches die Details der Verwaltungsinformation aktualisiert, wobei die Verwaltungsinformation einen oder mehrere Posten umfasst, welche ausgewählt werden in der Gruppe, welche besteht aus:
Information, welche Inhalt unter Verwaltung durch das Inhaltsendgerät (5) identifiziert, Anhanginformation in Verbindung mit dem Inhalt, Daten, welche für den Erwerbsstatus einer Lizenz in Verbindung mit dem Inhalt bezeichnend sind, Daten, welche für den Herunterladestatus von Inhalt bezeichnend sind, Daten, welche für den Löschstatus von Inhalt bezeichnend sind, und Daten, welche für den gebuchten Empfangsstatus von Inhalt bezeichnend sind, und
Speichern von Referenzinformation, welche für einen Hilfssatz von Details der verwaltungsinformation bezeichnend ist, welche durch das Inhaltsendgerät (5) erzeugt wird;
Aktualisieren der gespeicherten Referenzinformation, wobei die empfangenen aktualisierten Details verwendet werden; und
selektives Bereitstehen dem Benutzer mit Zugriff auf die Referenzinformation über ein Endgerät (6, 7), welches vom Inhaltsendgerät (5) verschieden ist.

15. Computerprogramm nach Anspruch 14, um, wenn in einen Computer geladen und darin ausgeführt, folgende Schritte durchzuführen:
Akzeptieren einer Prüfanforderung vom anderen Endgerät (6, 7), wobei die Prüfanforderung eine Anforderung durch den Benutzer ist, um die gespeicherte Referenzinformation zu prüfen; und
Übertragen - zum anderen Endgerät (6, 7) - von Details der Referenzinformation in Bezug auf die akzeptierte Prüfanfordrung.

16. Computerprogramm nach Anspruch 14, um, wenn in einen Computer geladen und darin ausgeführt, folgende Schritte durchzuführen:
Akzeptieren - vom anderen Endgerät (6, 7) - eines Betätigungsbefehls auf einen bestimmten Inhalt in Verbindung mit Referenzinformation; und
Übertragen des akzeptierten Betätigungsbefehls zum Inhaltsendgerät (5), wobei
der Referenzinformations-Aktualisierungsschritt das Aktualisieren der gespeicherten Referenzinformation gemäß dem akzeptierten Betätigungsbefehl umfasst.

17. Computerprogramm nach Anspruch 16, wobei der Betätigungsbefehl-Akzeptierungsschritt das Akzeptieren - vom anderen Endgerät (6, 7) - eines Betätigungsbefehls auf einen bestimmten Inhalt umfasst, der nicht mit Referenzmfbrmation verknüpft ist, welche schon im Referenzserver (3) gespeichert ist,
der Betätigungsbefehl-Übertragungsschritt Übertragen - zum Inhaltsendgerät (5) - des Betätigungsbefehls für den bestimmten Inhalt umfasst, der nicht mit Referenzinformation verknüpft ist, welche schon im Referenzserver (3) gespeichert ist, und
der Referenzinformations-Aktualisierungsschritt das Veranlassen umfasst, dass der Referenzinformations-Speicherschritt zusätzlich die Referenzinformation des bestimmten Inhalts speichert, der nicht mit Referenzinformation verknüpft ist, welche schon im Referenzserver (3) gespeichert ist.

## Revendications

1. Système de contenu incluant :
un terminal de contenu (5), pouvant être actionné par un utilisateur, pour recevoir un contenu depuis un serveur de contenu (2), et
un serveur de référence (3) pour procurer un accès sélectif à des informations de référence représentatives de l'état de gestion du contenu géré par ledit terminal de contenu (5) ; dans lequel :
le terminal de contenu (5) est adapté à gérer un contenu en fonction de commandes dudit utilisateur, à générer, mettre à jour et enregistrer des informations de gestion indiquant l'état de gestion du contenu, et à transmettre audit serveur de référence les informations de gestion ainsi générées et les informations de gestion mises à jour, lesdites informations de gestion incluant un ou plusieurs éléments choisis dans le groupe consistant en : des informations identifiant le contenu géré par le terminal de contenu (5), des informations d'annexes associées au contenu, des données représentatives de l'état d'acquisition d'une licence associée au contenu, des données représentatives de l'état de téléchargement du contenu, des données représentatives de l'état effacé du contenu et des données représentatives de l'état de réservation pour réception du contenu, et
le serveur de référence (3) est adapté à enregistrer les informations de référence générées par ledit terminal de contenu et reçues depuis ledit terminal de contenu (5), lesdites informations de référence correspondant à un sous-ensemble desdites informations de gestion, à assurer la synchronisation de détails entre les informations de référence enregistrées dans le serveur de référence et les informations de gestion enregistrées dans le terminal de contenu par l'intermédiaire de communications avec le terminal de contenu (5), et à donner la permission audit utilisateur de consulter les détails des informations de référence résultant de la synchronisation des détails, par l'intermédiaire d'un terminal (6, 7) différent dudit terminal de contenu.

2. Terminal de contenu (5) pouvant être actionné par un utilisateur et adapté à gérer un contenu en fonction de commandes dudit utilisateur, ledit terminal de contenu (5) comprenant :
un moyen de contenu (11) pour recevoir un contenu d'un serveur de contenu ;
une section de génération d'informations de gestion (11) adaptée à générer
des informations de gestion indiquant l'état de gestion du contenu géré par ledit terminal de contenu, lesdites informations de gestion incluant un ou plusieurs éléments choisis dans le groupe consistant en : des informations identifiant le contenu géré par le terminal de contenu (5), des informations d'annexes associées au contenu, des données représentatives de l'état d'acquisition d'une licence associée au contenu, des données représentatives de l'état de téléchargement du contenu, des données représentatives de l'état effacé du contenu et des données représentatives de l'état de réservation pour réception du contenu ;
un moyen d'enregistrement d'informations de gestion (12) pour enregistrer les informations de gestion générées ;
un moyen de mise à jour d'informations de gestion (11) pour mettre à jour, lorsqu'une modification apparaît dans l'état de gestion du contenu, les informations de gestion enregistrées ;
un moyen de transmission d'informations de gestion (13) pour transmettre des détails des informations de gestion générées et des informations de gestion mises à jour à un serveur de référence (3) chargé de gérer l'accès sélectif par ledit utilisateur, depuis un terminal (6, 7) différent dudit terminal de contenu, à des informations de référence correspondant à un sous-ensemble de détails des informations de gestion.

3. Terminal de contenu (5) selon la revendication 2, comprenant :
un moyen de réception d'informations d'annexes (11) pour recevoir, depuis un serveur de fourniture d'informations d'annexes (8), des informations d'annexes associées au contenu fourni par le serveur de contenu (2) ; et
un moyen de génération d'informations de gestion (11) pour générer des informations de gestion basées sur les informations d'annexes reçues et sur l'état de gestion du contenu, dans lequel
le moyen d'enregistrement d'informations de gestion (12) est adapté à enregistrer des informations de gestion générées par le moyen de générations d'informations de gestion (11).

4. Terminal de contenu (5) selon la revendication 3, comprenant :
un moyen de réception de commande d'opération (13) pour recevoir, depuis le serveur de référence (3), une commande d'opération reçue par le serveur de référence (3) depuis un terminal différent (6) dudit terminal de contenu, ladite commande d'opération étant applicable à un contenu particulier associé aux informations de référence ;
un moyen d'opération (11) pour exécuter une opération pour ledit contenu particulier en fonction de la commande d'opération reçue ; et
un moyen de mise à jour (11) pour mettre à jour les informations de gestion dudit contenu particulier enregistrées par le moyen d'enregistrement d'informations de gestion en fonction de l'opération exécutée.

5. Terminal de contenu (5) selon la revendication 3, comprenant
un moyen (11) pour déterminer si des informations de gestion sont ou non déjà enregistrées dans le moyen d'enregistrement d'informations de gestion concernant le contenu particulier associé à une commande d'opération reçue, et
un moyen d'enregistrement supplémentaire pour faire enregistrer additionnellement par ledit moyen d'enregistrement d'informations de gestion les informations de gestion dudit contenu particulier lorsque le moyen de détermination détermine que les informations de gestion dudit contenu particulier ne sont pas encore enregistrées dans le moyen d'enregistrement d'informations de gestion (12).

6. Serveur de référence (3) comprenant :
un moyen de réception d'informations de gestion pour recevoir, depuis un terminal de contenu (5) destiné à gérer un contenu en fonction de commandes d'un utilisateur, des informations de gestion générées par ledit terminal de contenu (5) et des détails des informations de gestion mises à jour déterminés par le terminal de contenu (5) mettant à jour les détails des informations de gestion, lesdites informations de gestion étant représentatives de l'état de gestion du contenu géré par ledit terminal de contenu et incluant un ou plusieurs éléments choisis dans le groupe consistant en : des informations identifiant le contenu géré par le terminal de contenu (5), des informations d'annexes associées au contenu, des données représentatives de l'état d'acquisition d'une licence associée au contenu, des données représentatives de l'état de téléchargement du contenu, des données représentatives de l'état effacé du contenu et des données représentatives de l'état de réservation pour réception du contenu ;
un moyen d'enregistrement d'informations de référence (18) pour enregistrer des informations de référence représentatives d'un sous-ensemble de détails desdites informations de gestion générées par le terminal de contenu (5) ;
un moyen de mise à jour d'informations de référence (20) pour mettre à jour les informations de référence enregistrées en utilisant les détails mis à jour reçus ; et
un moyen de contrôle d'accès sélectif adapté à permettre l'accès dudit utilisateur aux informations de référence par l'intermédiaire d'un terminal (6, 7) différent dudit terminal de contenu.

7. Serveur de référence (3) selon la revendication 6, comprenant :
un moyen d'acceptation de requête de contrôle pour accepter une requête de contrôle dudit utilisateur à partir dudit terminal différent (6, 7), ladite requête de contrôle étant une requête dudit utilisateur pour contrôler les informations de référence enregistrées ; et
un moyen de transmission de détails de référence pour transmettre, audit terminal différent (6, 7), des détails des informations de référence en fonction de la requête de contrôle acceptée.

8. Serveur de référence (3) selon la revendication 6 ou 7, comprenant :
un moyen d'acceptation de commande d'opération pour accepter, depuis ledit terminal différent (6, 7), une commande d'opération pour un contenu particulier associé aux informations de référence ; et
un moyen de transmission de commande d'opération pour transmettre la commande d'opération acceptée au terminal de contenu (5), dans lequel
le moyen de mise à jour d'informations de référence (20) est adapté à mettre à jour les informations de référence enregistrées en fonction de la commande d'opération acceptée.

9. Serveur de référence (3) selon la revendication 8, dans lequel le moyen d'acceptation de commande d'opération est adapté à accepter, depuis ledit terminal différent (6, 7), une commande d'opération pour un contenu particulier qui n'est pas associé aux informations de référence déjà enregistrées dans le serveur de référence (3),
le moyen de transmission de commande d'opération est adapté à transmettre, au terminal de contenu (5), la commande d'opération pour ledit contenu particulier qui n'est pas associé aux informations de référence déjà enregistrées dans le serveur de référence (3), et
le moyen de mise à jour d'informations de référence (20) est adapté à faire enregistrer additionnellement par le moyen d'enregistrement d'informations de référence les informations de référence dudit contenu particulier qui n'est pas associé aux informations de référence déjà enregistrées dans le serveur de référence (3).

10. Programme informatique pour, lorsqu'il est chargé dans un ordinateur et exécuté dans celui-ci, exécuter les étapes consistant à :
recevoir un contenu d'un serveur de contenu (2) en fonction d'une instruction d'un utilisateur ;
générer des informations de gestion indiquant l'état de gestion du contenu, lesdites informations de gestion incluant un ou plusieurs éléments choisis dans le groupe consistant en : des informations identifiant le contenu géré par le terminal de contenu (5), des informations d'annexes associées au contenu, des données représentatives de l'état d'acquisition d'une licence associée au contenu, des données représentatives de l'état de téléchargement du contenu, des données représentatives de l'état effacé du contenu et des données représentatives de l'état de réservation pour réception du contenu ;
enregistrer lesdites informations de gestion générées ;
transmettre lesdites informations de gestion générées à un serveur de référence (3) chargé de gérer un accès sélectif par ledit utilisateur, par l'intermédiaire d'un terminal (6, 7) différent dudit terminal de contenu (5), à des informations de référence correspondant à un sous-ensemble de détails des informations de gestion ;
lorsqu'une modification apparaît dans l'état de gestion du contenu, mettre à jour les informations de gestion enregistrées; et
transmettre les détails des informations de gestion mises à jour audit serveur de référence (3).

11. Programme informatique selon la revendication 10 pour, lorsqu'il est chargé dans un ordinateur et exécuté dans celui-ci, exécuter les étapes consistant à :
recevoir, depuis un serveur de fourniture d'informations d'annexes (8), des informations d'annexes associées au contenu fourni par le serveur de contenu (2) ; et
générer les informations de gestion sur la base des informations d'annexes reçues et de l'état de gestion du contenu.

12. Programme informatique selon la revendication 11 pour, lorsqu'il est chargé dans un ordinateur et exécuté dans celui-ci, exécuter les étapes consistant à :
recevoir, depuis le serveur de référence (3), une commande d'opération reçue par le serveur de référence (3) depuis ledit terminal différent (6, 7), ladite commande d'opération étant applicable à un contenu particulier associé aux informations de référence ;
exécuter une opération pour ledit contenu particulier en fonction de la commande d'opération reçue ; et
mettre à jour les informations de gestion dudit contenu particulier, enregistrées à l'étape d'enregistrement d'informations de gestion, en fonction de l'opération exécutée.

13. Programme informatique selon la revendication 11 pour, lorsqu'il est chargé dans un ordinateur et exécuté dans celui-ci, exécuter les étapes consistant à :
déterminer si les informations de gestion sont ou non déjà enregistrées dans le moyen d'enregistrement d'informations de gestion (12) en relation avec le contenu particulier associé à une commande d'opération reçue ; et
faire enregistrer additionnellement par ladite étape d'enregistrement d'informations de gestion les informations de gestion dudit contenu particulier lorsque l'étape de détermination détermine que les informations de gestion dudit contenu particulier n'ont pas encore été enregistrées à l'étape d'enregistrement d'informations de gestion.

14. Programme informatique pour, lorsqu'il est chargé dans un ordinateur et exécuté dans celui-ci, exécuter les étapes consistant à :
recevoir, depuis un terminal de contenu (5) destiné à gérer un contenu en fonction de commandes d'un utilisateur, des informations de gestion générées par ledit terminal de contenu (5) et des détails mis à jour déterminés par le terminal de contenu (5) mettant à jour les détails des informations de gestion, lesdites informations de gestion incluant un ou plusieurs éléments choisis dans le groupe consistant en : des informations identifiant le contenu géré par le terminal de contenu (5), des informations d'annexes associées au contenu, des données représentatives de l'état d'acquisition d'une licence associée au contenu, des données représentatives de l'état de téléchargement du contenu, des données représentatives de l'état effacé du contenu et des données représentatives de l'état de réservation pour réception du contenu ;
enregistrer des informations de référence représentatives d'un sous-ensemble de détails desdites informations de gestion générées par le terminal de contenu (5) ;
mettre à jour les informations de référence enregistrées en utilisant les détails mis à jour reçus ; et
procurer de façon sélective audit utilisateur un accès aux informations de référence par l'intermédiaire d'un terminal (6, 7) différent dudit terminal de contenu (5).

15. Programme informatique selon la revendication 14 pour, lorsqu'il est chargé dans un ordinateur et exécuté dans celui-ci, exécuter les étapes consistant à :
accepter une requête de contrôle dudit terminal différent (6, 7), ladite requête de contrôle étant une requête dudit utilisateur pour contrôler les informations de référence enregistrées ; et
transmettre, audit terminal différent (6, 7), des détails des informations de référence en fonction de la requête de contrôle acceptée.

16. Programme informatique selon la revendication 14 pour, lorsqu'il est chargé dans un ordinateur et exécuté dans celui-ci, exécuter les étapes consistant à :
accepter, depuis ledit terminal différent (6, 7), une commande d'opération pour un contenu particulier associé aux informations de référence ; et
transmettre la commande d'opération acceptée au terminal de contenu (5), dans lequel
l'étape de mise à jour d'informations de référence (20) comprend la mise à jour, en fonction de la commande d'opération acceptée, des informations de référence enregistrées.

17. Programme informatique selon la revendication 16, dans lequel l'étape d'acceptation de commande d'opération comprend l'acceptation, dudit terminal différent (6, 7), d'une commande d'opération pour un contenu particulier qui n'est pas associé aux informations de référence déjà enregistrées dans le serveur de référence (3),
l'étape de transmission de commande d'opération comprend la transmission, au terminal de contenu (5), de la commande d'opération pour ledit contenu particulier qui n'est pas associé aux informations de référence déjà enregistrées dans le serveur de référence (3), et
l'étape de mise à jour d'informations de référence comprend l'enregistrement additionnel par l'étape d'enregistrement d'informations de gestion des informations de référence dudit contenu particulier qui n'est pas associé aux informations de référence déjà enregistrées dans le serveur de référence (3).
